# EUROPEAN PATENT SPECIFICATION

(11) **EP 1 419 000 B1**
(45) Date of publication and mention of the grant of the patent: **09.09.2009**
(21) Application number: 01995409.8
(22) Date of filing: 06.12.2001
(51) Int. Cl.: B01D 33/21, B01D 33/46

(54) **DISC-TYPE FILTER**
SCHEIBENFILTER
APPAREIL DE FILTRATION DE TYPE DISQUE

(30) Priority: 12.12.2000 US 255213 P
(43) Date of publication of application: 19.05.2004
(73) Proprietor: FLSmidth Technology A/S, 2500 Valby (DK)
(72) Inventor: FLANAGAN, Peter, J., Sandy, UT 84093 (US)
(74) Representative: Finck, Dieter
(86) International application number: PCT/US2001/046987
(87) International publication number: WO 2002/047792

(56) References cited:
- US-A- 3 096 278
- US-A- 3 193 105
- US-A- 3 270 888
- US-A- 4 056 473
- US-A- 4 086 168

## Description

The present invention relates to disc-type filtration apparatus employed for separation of liquid from a suspension or slurry, such as a lime mud. More specifically, the invention relates to a disc-type filtration apparatus housed within a pressure vessel and employing a positive pressure in conjunction with filter discs to effect the liquid separation.

Disc-type filtration apparatus are well known, and have been employed for decades. In its simplest form, such an apparatus employs one or more hollow filter discs, the sidewalls of which discs are either formed of a porous material or define a frame covered with a porous cover, commonly termed a filter cloth. The degree of porosity is selected for the suspension to be filtered, considering the viscosity of the liquid component as well as the particle size or sizes of the solid component The discs are usually circumferentially sectored into compartments, are oriented vertically and mutually laterally spaced along a tube extending along a horizontal axis. The interiors of the disc sectors are in communication with the interior of the tube. During operation, the discs are rotated about the longitudinal axis so as to become coated with the suspension. A positive pressure differential is created between the exteriors of the discs and the interiors thereof to draw much of the liquid component of the suspension coating the disc exteriors into the interiors and significantly reducing the liquid content of the suspension on the disc exteriors to form a "cake". The cake is then removed from the disc exteriors.

Two principal approaches have been used to create the pressure differential between the disc interiors and exteriors. In one approach, exemplified by the teachings of U.S. Patents 2,699,872 and 2,899,066, a vacuum is drawn in the tube and the exteriors of the discs are at ambient atmospheric pressure. A currently more favored approach, due to its ability to provide a greater pressure differential, particularly in the case of large, multidisc filters, is to deploy the filter discs within a pressure vessel which is pressurized above ambient, as by an air compressor. This latter approach is exemplified by the teachings of U.S. Patents 2,079,755; 3,252,577; 5,849,202; 6063,294; Canadian Patent No. 1,192,142 and International Patent Application No. WO 90/10490. A commercially available filtration apparatus of the latter type is offered by EIMCO Process Equipment Co. (formerly Baker Process), of Salt Lake City, Utah, assignee of the present invention, as the ClariDisc® Filter. Another commercially available apparatus of the latter type is offered by Kvaemer Pulping AB of Karlstad, Sweden, as the CAUSTEC® PDW™ filter.

The design of the aforementioned ClariDisc® Filter has been well accepted by customers, as the solids from this filter (comprising filter cake which has been re-slurried), are collected in a sloping outlet trough portion integral with and protruding beyond the cylindrical envelope of a cylindrical pressure vessel portion housing the discs, and discharged from the pressure vessel through a single outlet or multiple outlets. This is in contrast to the CAUSTEC® PDW™ filter, which uses a plurality of discharge outlets extending from the exterior of the pressure vessel, one outlet for each disc. The CAUSTEC® PDW™ filter is unduly complex and expensive to both build and deploy, due to the use of multiple outlets extending from the cylindrical pressure vessel portion. However, it is also somewhat costly to design and manufacture the trough and outlet assembly for the ClariDisc® Filter, since it functions as part of the outer wall of the pressure vessel and, therefore, must comply with certain governmental or professional engineering standards, the latter exemplified by the American Society of Mechanical Engineers (ASME) Section 8 Pressure Vessel Code.

A disc-type filtration apparatus of the generic kind as described in US-A-3 270 888 comprises a housing to be partially filled with a slurry with superatmospheric pressure and a hollow longitudinally extending shaft, mounted for rotation within the housing as well as a plurality of hollow spaced filter discs located along the shaft within the housing and fixed to the shaft. The interior of the discs is connected with the interior of the shaft through passages for conducting the filtrate into the shaft and out of the housing. Between and adjacent to the filter discs and to an elevation above that of the normal level of the slurry within the housing discharge chutes are provided. Adjacent each face of each filter disc above the level of the slurry scraper blades are provided for scraping filter cake from the discs and for feeding it to the discharge chutes, which are connected on their lower ends with a tube extending along the bottom of the housing. In this tube a conveyor is mounted for conveying the filter cake to the exterior of the housing.

US-A-3 096 278 discloses a rotary disc filter device including a housing and a shaft mounted rotatably in the housing and provided with a plurality of disc filters for rotation therewith and provided with connections to the interior of the shaft which is connected through a filter valve with the vacuum- or pressure source. With each side of each filter disc a discharge chute is associated adapted to receive the filter cake removed by scraper blades from the filter discs. The discharge chutes open into a common collecting means which is shown as a horizontal channel. The filtrate is sucked through the filter back on the filter discs, when the interior of the shaft is connected with this vacuum source. By a connection with the pressure source the filter cloth is snap blown outwardly for effectively scraping the filter cake from the cloth.

US-A-4 086 168 refers to a liner for a discharge chute for a disc filter to avoid clogging of the chute by the filter cake. The filter cake is discharged by the chute on a conveyor belt.

It is the object of the invention to provide a disc-type filtration apparatus which allows discharging of the filter cake without use of any mechanically complex device.

This object is achieved with the apparatus of claim 1, embodiments of which are subjects of the subclaims 2 to 7.

The present invention provides a disc-type filtration apparatus including a collection trough internal to a cylindrical vessel housing the filter discs. The collection trough for the inventive apparatus is entirely disposed within the cylinder or cylindrical envelope of the vessel and thus may be configured and located without concern for pressure differentials to receive and direct filter cake removed from the discs and then reslurried and sluiced toward the center of the trough using flowing liquid, to be discharged longitudinally centrally through a single outlet extending downwardly from the trough and through the side wall of the vessel cylinder.

The use of a cylindrical vessel having a single outlet provided by the design of the filtration apparatus of the present invention results in a much lower design and fabrication cost for the vessel, even if a slightly larger cylinder diameter for a given disc diameter is required. In addition, relocation of the trough within the vessel allows for the height of the filtration apparatus to be significantly reduced for easier placement and reduced installation costs.

The present invention also encompasses a method of filtration wherein a suspension may be separated within a cylindrical envelope of a vessel into filter cake and filtrate at a plurality of laterally spaced locations and the filter cake collected from the plurality of spaced locations to a single location within the cylindrical envelope for discharge from the vessel by using gravity and flows of liquid only.

In the drawings, which illustrate what is currently considered to be the best mode for carrying out the invention:
FIG. 1 is a transverse sectional view of the filtration apparatus of the present invention;
FIG. 2 is a side view of a discharge chute and the collection trough.

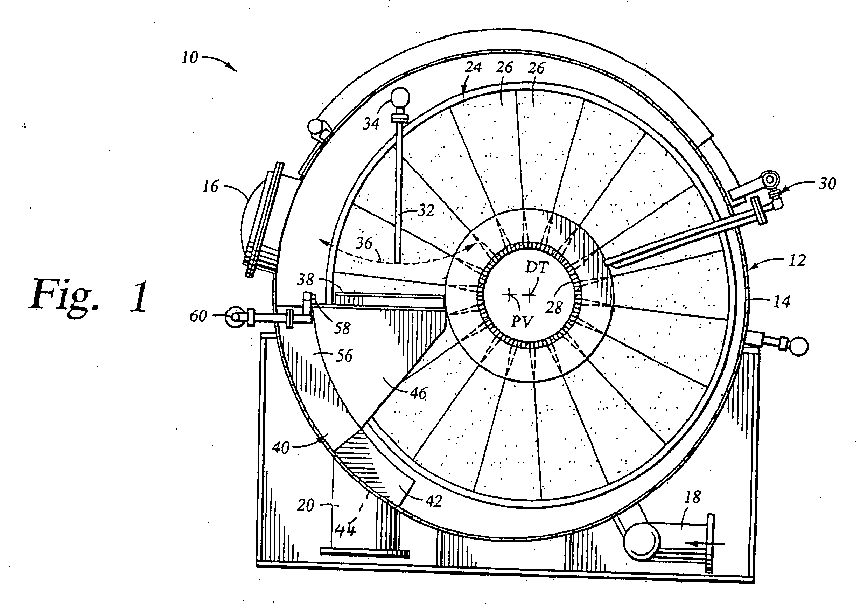

Referring now to the drawing figures, filtration apparatus 10 of the present invention includes a pressure vessel 12 having a substantially cylindrical envelope and defined in part by side wall 14, which substantially defines a cylinder concentric with a longitudinal vessel axis PV. Access hatches 16, an slurry inlet conduit 18 and a filter cake (also termed "mud cake") outlet conduit 20 extend through the side wall 14. A plurality of filter discs 24 (for example, and in this instance, six) are disposed within the pressure vessel 12. The filter discs 24 each include multiple sectors 26 as known in the art, which communicate with the interior of one or more central filtrate discharge tubes 28 (a single tube being employed in this embodiment), an end of which (not shown) also extends through an end of the pressure vessel 12 to effectuate removal of the liquid component of the suspension under filtration drawn therefrom under differential pressure through filter cloths disposed on the exteriors of the sectors 26 which collectively form the filter discs 24. It should be noted that, in the preferred embodiment the axis DT of the filtrate discharge tube 28 is laterally offset from the longitudinal axis PV of the pressure vessel 12. A disc wash assembly 30 is associated with each filter disc 24, as is a high pressure shower assembly 32 for disc cleaning, the latter movable by drive assembly 34 in an oscillating fashion through arc 36 as shown in FIG. 1. A discharge scraper 38 in the form of doctor blades flanks each filter disc 24 for removal of mud cake from the exterior thereof Such an apparatus as described to this point is entirely conventional, as is its operation. Therefore, no further description of these features is required.

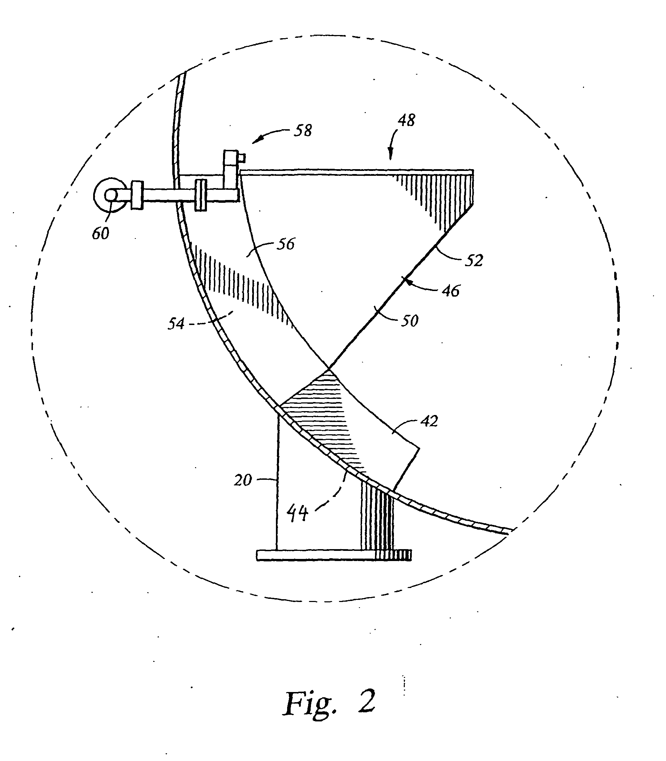

Disposed within pressure vessel 12 and partially laterally offset and extending below filter discs 24 (see FIG. 1) is a mud cake collection trough 40. The through 40 is elongate and extends beyond the longitudinally outermost filter disc 24 of the row of filter discs 24. The trough 40 includes two inclined bottom walls 42 extending to the side wall 14 of the pressure vessel 12 and sloping downwardly away from the horizontal midplane of the pressure vessel 12 as well as toward the longitudinal center of the trough 40, where an opening 44 communicates the through 40 with the mud cake outlet conduit 20 (FIGS. 1 and 2). The trough 40 is further configured on its inner side with a plurality of discharge chutes 46, one substantially parallel to and flanking each side of each filter disc 24, to receive mud cake removed from the sides of the filter discs 24 by the discharge scrapes 38. Referring to FIGS. 1 and 2, each of the discharge chutes 46 includes an elongated open mouth 48 at an upper extent thereof Each open mouth 48 is of a length sufficient to receive mud cake falling from the discharge scrapers 38 substantially spanning the radius of the filter discs 24 between the central filtrate discharge tube 28 and the filter discs' outer edges. More particularly, the open mouth 48 is desirably of a length which corresponds to a radial length of the filtering area of the sectors 26 (e.g., the distance between the outer radius of the filter discs 24 and the radius of the central filtrate discharge tube 28).

Each discharge chute 46 further includes two side walls 50 oriented substantially parallel to filter discs 24, and an inclined lower wall 52 extending between its side walls 50 and sloping downwardly from mouth 48 and away from the center of the pressure vessel 12 toward the side wall 14 thereof The outer extents the of discharge chutes 46 comprise openings 54 into an outer collection portion 56 of the trough 40, wherein inclined bottom walls 42 lead to opening 44 in the side wall 14. Spray heads 58 fed by a manifold 60 direct jets or other flows of fluid, such as, for example, water into the discharge chutes 46 to prevent accumulation of mud cake on the side walls 50 thereof and to dilute the mud cake scraped off the filter discs 24 to enhance sluicing thereof into the opening 44 for discharge from pressure vessel 12 through the outlet conduit 20.

No auger or other mechanical device is required to move the mud cake scraped from the filter discs 24 to the outlet conduit 20, the diluted mud cake flowing under gravity down the inclined lower walls 52 to the openings 54 and then along one of the bottom walls 42 of the trough 40 to the opening 44. The side walls 50 at each longitudinal end of the trough 40 extend to the side wall 14 of pressure vessel 12 to completer the trough 40.

The configuration of the trough 40 and the discharge chutes 46 is such that the open mouths 48 are positioned above an intended slurry liquid level during operation of the filtration apparatus 10. The discharge chutes 46 and the trough 40 thus form a barrier separating discharged filter cake from the slurry contained in the pressure vessel 12. Such an arrangement allows the discharge and initial collection of the filter cake to take place entirely within the substantially cylindrical envelope of the pressure vessel 12 in a continuous filtration process.

It is noted that in larger filters having a large quantity of filter discs 24, it may be desirable to incorporate multiple troughs 40 for removal of the filter cake. For example, if the filter 10 includes twelve filter discs 24 it may be desirable to include two troughs 40, each having an associated opening 40 and each being configured to collect filter cake from six filter discs 24. It should be noted that the invention is not limited to a single trough 40 for each six filter discs 24 and that the above described embodiments are simply exemplary. Rather, numerous configurations are contemplated wherein one or more troughs 40 may be used with each trough 40 being associated with multiple discharge chutes 46 such that the number of outlet conduits 20 formed in the sidewall 14 of the pressure vessel 12 is less than the number of discharge chutes 46 contained therein.

It is noted that the number of troughs 40 formed in a given filtration apparatus 10 may depend on such factors as the number of filter discs 24 present in the filtration apparatus 10, the viscosity or flowability of the filter cake, and the minimum allowable angle of the bottom walls 42 which still provides sufficient gravity for collection and removal of the filter cake.

It is also noted that the outlet conduits 20 and associated openings 44 need not be in the longitudinal center of the trough 40. Rather, the opening 44 may be formed at any longitudinal location along the trough 40. Thus, for example, a single bottom wall 42 may extend from one longitudinal end of the trough 40 to an opening 44 at the opposing longitudinal end of the trough 40. Thus, the present invention may be easily adapted to various plant layouts wherein locating associated piping may be a concern.

Additionally, while the invention has been described with respect to a pressure vessel 12, the above trough configuration may be implemented into a tank or vat of a nonpressurized vessel. Thus, for example, a filter which draws a vacuum through the filtrate discharge tube 28 while maintaining an ambient pressure at the exteriors of the filter discs 24 may likewise incorporate a trough 40 such as described above.

## Claims

1. Disc-type filtration apparatus, comprising:
- a vessel (12) having a substantially cylindrical envelope with a longitudinal axis (PV) defining the side wall (14) of the vessel (12),
- a plurality of spaced, hollow, rotatable filter discs (24) oriented transverse to the longitudinal axis (PV) of the vessel (12) and having interiors in communication with at least one filtrate discharge tube (28) extending substantially parallel to the longitudinal axis (PV), and
- a plurality of discharge chutes (46) flanking the filter discs (24) for receiving mud cake removed from the sides of the filter discs (24) and for leading the mud cake to a collection portion (56) and to an outlet conduit (20),
**characterized**
- **in that** at least one trough (40) is located within the envelope of the vessel (12) proximate the envelope,
- **in that** an outer extent of the at least one trough (40) is comprised of a portion of the side wall (14),
- **in that** the at least one trough (40) includes at least some of the plurality of the discharge chutes (46) leading to the collection portion (56) of the trough (40),
- **in that** the collection portion (56) of the at least one trough (40) includes at least one inclined bottom wall (42) sloping toward an opening (44) of the trough (40), and
- **in that** the opening (44) of the trough (40) opens into the outlet conduit (20) extending through the side wall (14) of the vessel (12).

2. The filtration apparatus according to claim 1,
- wherein each of the discharge chutes (46) includes a mouth (48) for receiving mud cake and two side walls (50) extending vertically downward from the mouth (48) to an opening (54) directing the mud cake into the collecting portion (56),
**characterized in that**
- the side walls (50) of each of the discharge chutes (46) extend to an inclined lower wall (52), which slopes downwardly away from the longitudinal axis (PV) of the vessel (12), and to the side wall (14) thereof, and
- **in that** outer edges of the side walls (50) and the lower wall (52) define the opening (54) directing the mud cake into the collection portion (56) of the trough (40).

3. The filtration apparatus according to claim 1 or 2, **characterized**
- **in that** the collection portion (56) of the trough (40) includes two inclined bottom walls (42) sloping toward a longitudinal center of the at least one trough (40), and
- **in that** the opening (44) is disposed at approximately the longitudinal center of the trough (40).

4. The filtration apparatus according to one of the preceding claims, **characterized in that** the trough extends longitudinally from at least one longitudinal end of the plurality of discs (24) to another.

5. The filtration apparatus according to one of the preceding claims, **characterized in that** a plurality of troughs (40) is provided and that there are a fewer number of troughs (40) than there are a number of discharge chutes (46).

6. The filtration apparatus according to one of the preceding claims, **characterized in that** the collection portion (56) of the at least one trough (40) is located adjacent the portion of the side wall (14).

7. The filtration apparatus according to one of the preceding claims, **characterized in that** the plurality of spaced, hollow filter discs (24) are positioned for rotation about an axis (DT) laterally offset from the longitudinal axis (PV).

## Patentansprüche

1. Filtriervorrichtung in Scheibenbauweise
- mit einem Behälter (12), der einen im Wesentlichen zylindrischen Mantel mit einer Längsachse (PV) aufweist, der die Seitenwand (14) des Behälters (12) bildet,
- mit einer Vielzahl von im Abstand angeordneten hohlen drehbaren Filterscheiben (24), die quer zur Längsachse (PV) des Behälters (12) ausgerichtet sind und Innenräume haben, die in Verbindung mit wenigstens einem Filtratabführrohr (28) stehen, das sich im Wesentlichen parallel zur Längsachse (PV) erstreckt, und
- mit einer Vielzahl von die Filterscheiben (24) flankierenden Abführrinnen (46) für die Aufnahme von von den Seiten der Filterscheiben (24) entferntem Filterkuchen und zum Führen des Filterkuchens zu einem Sammelabschnitt (56) und einer Auslassleitung (20),
**dadurch gekennzeichnet,**
- **dass** in den Mantel des Behälters (11) in der Nähe des Mantels wenigstens ein Trog (40) angeordnet ist,
- **dass** eine äußere Verlängerung des wenigstens einen Trogs (40) von einem Teil der Seitenwand (14) gebildet wird,
- **dass** der wenigstens eine Trog (40) wenigstens einige aus der Vielzahl von Abführrinnen (46) aufweist, die zu dem Sammelabschnitt (56) des Trogs (40) führen,
- **dass** der Sammelabschnitt (56) des wenigstens einen Trogs (40) wenigstens eine geneigte Bodenwand (42) aufweist, die sich zu einer Öffnung (44) des Trogs (40) hin neigt und
- **dass** die Öffnung (44) des Trogs (40) in die Auslassleitung (20) mündet, die sich durch die Seitenwand (14) des Behälters (12) erstreckt.

2. Filtriervorrichtung nach Anspruch 1, bei welcher
- jede der Abführrinnen (46) eine Mundöffnung (48) für die Aufnahme des Filterkuchens und zwei Seitenwände (50) aufweist, die sich vertikal nach unten von dem Mundstück (48) aus zu einer Öffnung (54) erstrecken, die den Filterkuchen in den Sammelabschnitt (56) leitet,
**dadurch gekennzeichnet,**
- **dass** die Seitenwände (50) jeder der Abführrinnen (46) sich zu einer geneigten unteren Wand (52) erstreckt, die nach unten von der Längsachse (PV) des Behälters (12) weg und zu seiner Seitenwand (14) geneigt ist, und
- **dass** Außenränder der Seitenwände (50) und der unteren Wand (52) die Öffnung (54) bilden, die den Filterkuchen in den Sammelabschnitt (56) des Trogs (40) leitet.

3. Filtriervorrichtung nach Anspruch 1 oder 2, **dadurch gekennzeichnet,**
- **dass** der Sammelabschnitt (56) des Trogs (40) zwei geneigte Bodenwände (42) hat, die sich zu einer Längsmitte des wenigstens einen Trogs (40) hin neigen, und
- **dass** die Öffnung (44) in etwa in der Längsmitte des Trogs (40) angeordnet ist.

4. Filtriervorrichtung nach einem der vorhergehenden Ansprüche, **dadurch gekennzeichnet, dass** sich der Trog in Längsrichtung von wenigstens einem Längsende der Vielzahl von Scheiben (24) zu einer weiteren erstreckt.

5. Filtriervorrichtung nach einem der vorhergehenden Ansprüche, **dadurch gekennzeichnet, dass** eine Vielzahl von Trögen (40) vorgesehen ist und dass die Anzahl der Tröge (40) kleiner ist als die Anzahl der Abführrinnen (46).

6. Filtriervorrichtung nach einem der vorhergehenden Ansprüche, **dadurch gekennzeichnet, dass** der Sammelabschnitt (56) des wenigstens einen Trogs (40) angrenzend an den Teil der Seitenwand (14) angeordnet ist.

7. Filtriervorrichtung nach einem der vorhergehenden Ansprüche, **dadurch gekennzeichnet, dass** die Vielzahl von im Abstand angeordneten hohlen Filterscheiben (24) für eine Drehung um eine Achse (DT) angeordnet ist, die seitlich zur Längsachse (PV) versetzt ist.

## Revendications

1. Dispositif de filtration à disques, comprenant :
- une cuve (12) comportant une enveloppe substantiellement cylindrique avec un axe longitudinal (PV) définissant la paroi latérale (14) de la cuve (12),
- une pluralité de disques filtrants (24) espacés, creux et mobiles en rotation orientés transversalement à l'axe longitudinal (PV) de la cuve (12) et ayant leurs intérieurs en communication avec au moins un tube d'évacuation de filtrat (28) s'étendant substantiellement parallèlement à l'axe longitudinal (PV), et
- une pluralité de goulottes d'évacuation (46) encadrant les disques filtrants (24) pour recevoir un tourteau de filtration retiré des côtés des disques filtrants (24) et pour guider le tourteau de filtration vers une portion de récupération (56) et vers un conduit de sortie (20),
**caractérisé**
- **en ce qu'**au moins une rigole (40) est située dans l'enveloppe de la cuve (12) à proximité de l'enveloppe,
- **en ce qu'**une extension extérieure de l'au moins une rigole (40) est composée d'une portion de la paroi latérale (14),
- **en ce que** l'au moins une rigole (40) comprend au moins certaines de la pluralité de goulottes d'évacuation (46) menant à la portion de récupération (56) de la rigole (40),
- **en ce que** la portion de récupération (56) de l'au moins une rigole (40) comprend au moins une paroi inférieure inclinée (42) s'inclinant vers une ouverture (44) de la rigole (40), et
- **en ce que** l'ouverture (44) de la rigole (40) s'ouvre dans le conduit de sortie (20) s'étendant à travers la paroi latérale (14) de la cuve (12).

2. Dispositif de filtration selon la revendication 1,
- dans lequel chacune des goulottes d'évacuation (46) comprend une embouchure (48) pour recevoir un tourteau de filtration et deux parois latérales (50) s'étendant verticalement vers le bas depuis l'embouchure (48) vers une ouverture (54) dirigeant le tourteau de filtration dans la portion de récupération (56),
**caractérisé en ce que**
- les parois latérales (50) de chacune des goulottes d'évacuation (46) s'étendent vers une paroi inférieure inclinée (52), qui s'incline vers le bas en s'éloignant de l'axe longitudinal (PV) de la cuve (12), et vers sa paroi latérale (14), et
- **en ce que** les bords extérieurs des parois latérales (50) et de la paroi inférieure (52) définissent l'ouverture (54) dirigeant le tourteau de filtration dans la portion de récupération (56) de la rigole (40).

3. Dispositif de filtration selon la revendication 1 ou 2, **caractérisé**
- **en ce que** la portion de récupération (56) de la rigole (40) comprend deux parois inférieures inclinées (42) s'inclinant vers un centre longitudinal de l'au moins une rigole (40), et
- **en ce que** l'ouverture (44) est disposée approximativement au centre longitudinal de la rigole (40).

4. Dispositif de filtration selon l'une des revendications précédentes, **caractérisé en ce que** la rigole s'étend longitudinalement depuis au moins une extrémité longitudinale de la pluralité de disques (24) vers une autre.

5. Dispositif de filtration selon l'une des revendications précédentes, **caractérisé en ce qu'**une pluralité de rigoles (40) est prévue et en ce le nombre de rigoles (40) est inférieur à un nombre de goulottes d'évacuation (46).

6. Dispositif de filtration selon l'une des revendications précédentes, **caractérisé en ce que** la portion de récupération (56) de l'au moins une rigole (40) est située à proximité de la portion de la paroi latérale (14).

7. Dispositif de filtration selon l'une des revendications précédentes, **caractérisé en ce que** la pluralité de disques filtrants (24) espacés et creux est positionnée pour rotation autour d'un axe (DT) décalé latéralement de l'axe longitudinal (PV).
